# EUROPÄISCHE PATENTSCHRIFT

(11) **EP 0 700 654 B1**
(45) Veröffentlichungstag und Bekanntmachung des Hinweises auf die Patenterteilung: **29.10.1997**
(21) Anmeldenummer: 95110763.0
(22) Anmeldetag: 11.07.1995
(51) Int. Cl.: A47J 27/21, A47J 27/00

(54) **Elektrisch beheiztes Kochgeschirr und Verfahren zu seiner Herstellung**
Electrically heated cooking vessel and method for producing it
Récipient de cuisson à chauffage électrique et méthode pour le fabriquer

(30) Priorität: 09.09.1994 DE 4432074
(43) Veröffentlichungstag der Anmeldung: 13.03.1996
(73) Patentinhaber: KRECK-EDELSTAHL GMBH, D-35708 Haiger-Weidelbach (DE)
(72) Erfinder: Pulfrich, Horst Dipl.-Ing., D-35708 Haiger (DE)
(74) Vertreter: Missling, Arne, Dipl.-Ing.

(56) Entgegenhaltungen:
- EP-A- 0 035 456
- EP-A- 0 111 445
- EP-A- 0 307 555
- DE-A- 1 615 203
- US-A- 2 826 670
- US-A- 4 052 590

## Beschreibung

Die Erfindung betrifft ein elektrisch beheiztes Kochgeschirr aus einem Kochgefäß aus nichtrostendem Stahl, das einstückig einen Gefäßboden und eine Gefäßwandung aufweist, und einer unter dem Gefäßboden vorgesehenen Heizunterlage aus einem gut wärmeleitenden Metall, die von einem in dieser Heizunterlage zwischen einem Korpus und dem Gefäßboden integrierten elektrischen Heizkörper beheizbar ist, wobei die Heizunterlage stoffschlüssig mit dem Kochgefäß verbunden ist, wobei der Korpus flach und scheiben- oder ringförmig ausgebildet ist.

Ein derartiges Kochgeschirr ist aus der EP-A-0 111 445 bekannt. Ein Vorteil dieser Heizvorrichtung besteht darin, daß die vom Heizkörper abgestrahlte Wärmeenergie von den Aluminiumplatten aufgefangen und auf den Boden des Kochgefäßes durch Wärmeleitung übertragen wird, wodurch Energieverluste minimalisiert werden können.

Aus der EP 0 307 555 B1 ist es bekannt, in der in einer aus Aluminium bestehenden, scheiben- oder ringförmigen Heizunterlage auf der dem Gefäßboden des Kochgefäßes abgewandten Seite eine ringförmige Nut auszuformen, in der der Heizkörper eingelegt werden kann, wobei die Nut gleichzeitig während des Reibschweißens ausgeformt wird, so daß dafür kein spezieller Arbeitsgang erforderlich ist. Der Heizkörper wird in die Nut eingepreßt und paßt seine Kontur der Nut an, so daß ein guter Wärmeübergang auf die Heizunterlage hin sichergestellt ist.

Diese Anordnung hat den Nachteil, daß der thermisch hochbelastete Heizkörper im Laufe der Zeit in der Nut locker werden kann, in der er lediglich unverbunden eingelegt bzw. eingepreßt ist, zumal die Nut nach unten offen bleibt; dies ist auch für die Energiebilanz ungünstig, weil ein Teil der in dem Heizkörper erzeugten Wärme nicht in das Kochgefäß transportiert wird und durch Abstrahlung und Konvektion verloren geht und dabei auch die Gefahr nicht auszuschließen ist, daß die zumeist aus einem Kunststoff bestehende Verkleidung des Bereichs des Kochgeschirrs unterhalb des Kochgefäßes, die auch die Heizunterlage verdeckt, thermisch zu hoch belastet wird.

Die Erfindung hat sich deshalb die Aufgabe gestellt, ein elektrisch beheiztes Kochgeschirr der eingangs näher bezeichneten Art so auszubilden, daß die von dem Heizkörper bereitgestellte Wärmemenge möglichst verlustarm zu dem in dem Kochgefäß befindlichen Kochgut transportiert wird, wobei auch ein guter Wärmeübergang gewährleistet ist und die verwendeten Bauteile einfach und kostengünstig gestaltet sind, und in einem zugehörigen erfindungsgemäßen Verfahren soll das Kochgeschirr in einfacher Weise herstellbar sein.

Erfindungsgemäß wird die Aufgabe mit den Merkmalen des Anspruches 1 gelöst.

Das erfindungsgemäße Kochgeschirr hat zunächst den Vorteil, daß der Heizkörper an dem Kochgeschirr unverlierbar zwischen dem Gefäßboden des Kochgefäßes und der Heizunterlage vorgesehen ist und dabei allseits von beiden miteinander fest verbundenen Bauteilen umgeben ist; die erzeugte Wärmemenge kann demzufolge sowohl unmittelbar über den Gefäßboden des Kochgefäßes in der Nachbarschaft des Heizkörpers wie auch über die (gut wärmeleitende) Heizunterlage in der gesamten Fläche des Gefäßbodens auf das Kochgut übertragen werden. Eine direkte Abstrahlung von Wärme aus dem Heizkörper findet nicht statt. Es wird aber auch vermieden, daß die (in der Regel aus Kunststoff bestehende) Verkleidung des Kochgeschirrs unterhalb des Kochgefäßes überhitzt wird.

Eine ästhetisch befriedigende Ausbildung wird dadurch erreicht, daß der Kragenrand von der Außenkontur der Gefäßwandung so beabstandet ist, daß eine den Kragenrand überdeckende Verkleidung der Heizunterlage mit dieser Außenkontur etwa bündig ausführbar ist, so daß das Kochgeschirr mit glatt geschlossener Oberfläche aus zwei Werkstoffen ausführbar ist.

Wird die Berandung des Kragenrandes mit dem Gefäßboden stoffschlüssig verbunden, so kann dabei gleichzeitig der Heizkörper mit erfaßt werden, wenn auch der Heizkörper beispielsweise mit der Heizunterlage und/oder dem Kochgefäß stoffschlüssig verbunden wird, so daß ein gesonderter Arbeitsgang hierfür nicht erforderlich ist. Die Verbindung erfolgt am besten durch Lötung, während der Korpus der Heizunterlage mit dem Kochgefäß besser durch Reibschweißung oder Lötung verbunden wird. Es sind aber auch andere geeignete Verbindungstechnologien denkbar.

In einer besonders vorteilhaften Ausführung des erfindungsgemäßen Kochgeschirrs ist der Kragenrand an dem Korpus um einen Winkel von etwa 90°, vorzugsweise über 90° gegenüber der Ebene des Korpus abgewinkelt angeordnet, so daß einerseits der Heizkörper vollständig abgedeckt ist und andererseits der Kragenrand auch als Halterung für eine Verkleidung dienen kann, unter der auch die Heizunterlage nicht mehr sichtbar ist.

Der Heizkörper ist zweckmäßig ringförmig, vorzugsweise kreisringförmig ausgebildet.

In einer ersten Variante kann die Anordnung so getroffen sein, daß der Heizkörper an seiner radial nach innen weisenden Kontur von einer Ringwand der Heizunterlage berandend eingefaßt ist, die zweckmäßig von einer flachen scheibenförmigen Einziehung der Heizunterlage ausgebildet wird; der Gefäßboden kann dabei eben ausgebildet sein. Ein solches Bauteil ist mit durchweg gleichförmiger Wanddicke ohne weiteres durch Fließpressen oder ein anderes Umformverfahren herstellbar. Es ist aber auch vorteilhaft, wenn der Heizkörper mit seiner radial nach innen weisenden Kontur an dem Kragen einer rondenförmigen, flachen Ausstülpung in dem Gefäßboden anliegt, wo dann der Kragenrand von einer ebenblechförmigen Heizunterlage abgekantet wird und diese wiederum überall die gleiche Wanddicke, aber nur eine einzige, durchgehende Faltkante aufweist.

Die durchweg ebene Heizunterlage bleibt ungestört, wenn in einfacher Weise der Kragenrand Ausnehmungen aufweist, die von Zuführungen für den Heizkörper durchsetzbar sind; in der Regel befindet sich diese Zuführung unterhalb eines Handgriffes an dem Kochgeschirr oder in diesem integriert.

Ein erfindungsgemäßes Kochgeschirr kann mittels eines rationellen Verfahrens angefertigt werden, bei dem zunächst das Kochgefäß, gegebenenfalls mit einer flachen Ausstülpung des Gefäßbodens, hergestellt wird, beispielsweise durch Tiefziehen, ebenso wie die Heizunterlage mit dem abgewinkelten Kragenrand und gegebenenfalls unter Ausbildung der Einziehung oder der Ringwand hergestellt wird, beispielsweise stufenweise aus einer Ronde oder komplett durch Gießpressen, worauf der Heizkörper in die Heizunterlage, an dem Kragenrand anliegend, eingelegt oder eingepreßt wird und die Heizunterlage, mit dem Korpus den Gefäßboden kontaktierend, an ihrem Kragenrand und gegebenenfalls der Heizkörper, einzeln oder gemeinsam, mit dem Gefäßboden des Kochgefäßes stoffschlüssig, vorzugsweise durch Löten, verbunden werden. Der Korpus der Heizunterlage hingegen wird, wenn überhaupt, am besten durch Reibschweißen oder Lötung flächig mit dem Gefäßboden verbunden. Fast alle diese Arbeitsgänge sind automatisierbar und können in einem Zug durchgeführt werden.

Über die eigentliche Aufgabenstellung hinaus ist bei dem erfindungsgemäß ausgebildeten und angefertigten Kochgeschirr weiterhin von Vorteil, daß die für den sicheren Betrieb erforderlichen Meß- und Schaltelemente auf der von dem Gefäßboden abgewandten Bodenfläche der Heizunterlage genau dort angebracht werden können, wo ihre Funktion optimal ist, insbesondere, wenn diese Bodenfläche eben ist. Jedenfalls ist es auch für die zugehörigen Sensoren von Vorteil, wenn sie keiner Wärmestrahlung aus dem Heizkörper ausgesetzt und allein kontaktbeheizt sind, weil dadurch eine thermostatische Regelung oder ein Überhitzungsschutz in Abhängigkeit von der tatsächlich an dem Kochgefäß herrschenden Temperatur vor sich gehen kann.

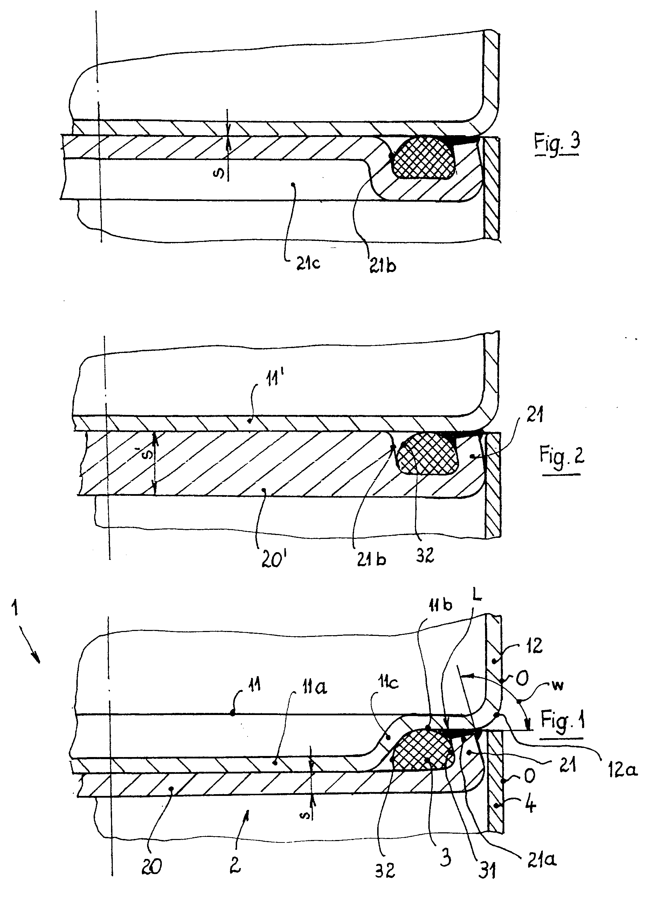

Die Erfindung wird nachstehend an Hand der Zeichnung näher erläutert. Es zeigen
- Fig. 1 bis 3: drei geringfügig verschiedene Ausführungen eines erfindungsgemäßen Kochgeschirrs im mittigen Längsschnitt nach in stark vereinfachend schematischer Darstellung.

Mit der Fig.1 funktionsgleiche, aber baulich abweichende Bauelemente der Fig.2 sind dabei mit den gleichen, aber einfach gestrichenen Bezugszeichen versehen; die übrigen Bezugszeichen sind mit denen der Fig.1 übereinstimmend.

Ein erfindungsgemäßes Kochgeschirr weist ein Kochgefäß 1 aus einem nichtrostenden Edelstahl für ein Kochgut, insbesondere zur Kochendwasserbereitung auf, das im wesentlichen einstückig aus einem in der Regel kreisförmigen Gefäßboden 11 und einer an diesem anschließenden, zylindrischen Gefäßwandung 12 besteht. Unter dem Gefäßboden 11 befindet sich eine Heizunterlage 2 aus einem gut wärmeleitfähigen und leicht bearbeitbaren Leichtmetall, zumeist einer Aluminiumlegierung, in der ein elektrischer Heizkörper 3 vorgesehen ist, der hier als ringförmig mit offenen Ringenden umlaufendes Bauteil ausgebildet wurde und mittels zweier in der Zeichnung weggelassener Zuführungen zu den Ringenden in allgemein bekannter Weise mit dem elektrischen Stromnetz verbindbar ist. Die Einzelheiten hierzu stehen in keinem unmittelbaren Zusammenhang mit der Erfindung und werden deshalb nicht weiter erörtert. Die Heizunterlage 2 und der bis zu einem Fußteil des Kochgeschirrs nach unten anschließende Teil der Anordnung ist von einer Verkleidung 4 abgedeckt, die aus einem geeigneten Kunststoff besteht und in dem Bereich der Heizunterlage 2 angedeutet ist; sie umschließt einen von der Außenkontur 12a der Gefäßwandung 12 entsprechend beabstandet endenden Kragenrand 21 der Heizunterlage 2 so, daß sie mit dem Gefäßboden 11 eine einheitliche zylindrische Oberfläche O bildet.

In der Ausführung der Fig.1 ist der Kragenrand 21 aus einem im übrigen blechförmig-ebenen Korpus 20 der Heizunterlage 2 um einen Winkel w von etwa 100° aus der Ebene des Korpus 20 abgewinkelt. Die Wanddicke s der Heizunterlage 2 ist überall gleich. Der Heizkörper 3 ist in den Zwickel zwischen dem Kragenrand 21 und dem Korpus 20 eingelegt und lehnt sich mit einer äußeren Kontur 31 an den Kragenrand 21 an. Der an dem Korpus 20 flächig anliegende und dort gegebenenfalls reibverschweißte Gefäßboden 11 ist in der Nachbarschaft der anschließenden Gefäßwandung 12 mit einer ringförmigen flachen Ausstülpung 11a versehen, die an der Außenkontur 12a der Gefäßwandung 12 eine schmale kreisringförmige Anschlagfläche 11b des Gefäßbodens 11 anschließen läßt, an der sowohl die Berandung 21a des Kragenrandes 21 als auch der Heizkörper 3 anliegt und dort mit dem Gefäßboden 11 durch eine gemeinsame Lötung L verbunden ist. Eine innere Kontur 32 des Heizkörpers 3 lehnt sich dabei an einen Kragen 11c der Ausstülpung 11a an. Auch mit dem Korpus 20 kontaktiert der Heizkörper 3, so daß er allseits in enger Berührung mit der Heizunterlage 2 und dem Gefäßboden 11 steht.

Eine gegenüber der Anordnung der Fig.1 geringfügig geänderte Ausführung des erfindungsgemäßen Kochgeschirrs zeigt die Fig.2. Dort ist der Gefäßboden 11' ohne eine Ausstülpung ausgebildet. Stattdessen endet der Korpus 20' in einer steilen Ringwand 21b, bevor der Kragenrand 21 anschließt. An der Ringwand 21b liegt die innere Kontur 32 des Heizkörpers 3 an, und der Korpus 20' ist zu diesem Zweck mit einer gegenüber derjenigen der Fig.1 vergrößerten Wanddicke s' ausgeführt.

Eine nach wie vor wie in der Fig.1 gleichförmige Wanddicke s kann beibehalten werden, wenn entsprechend der Fig.3 die Heizunterlage 2 mit einer flachen, kreisscheibenförmigen Einziehung 21c versehen ist, welche dabei die gleiche Ringwand 21b aus der Anordnung der Fig.2 besitzt.

### Aufstellung der Bezugszeichen

- 1: Kochgefäß
- 11,11': Gefäßboden
- 11a: Ausstülpung
- 11b: Anschlagfläche
- 11c: Kragen
- 12: Gefäßwandung
- 12a: Außenkontur
- 2: Heizunterlage
- 20,20': Korpus
- 21: Kragenrand
- 21a: Berandung
- 21b: Ringwand
- 21c: Einziehung
- 3: Heizkörper
- 31: (äußere) Kontur
- 32: (innere) Kontur
- 4: Verkleidung
- L: Lötung
- O: Oberfläche
- s,s': Wanddicke
- w: Winkel

## Patentansprüche

1. Elektrisch beheiztes Kochgeschirr aus einem Kochgefäß (1) aus nichtrostendem Stahl, das einstückig einen Gefäßboden (11,11') und eine Gefäßwandung (12) aufweist, und einer unter dem Gefäßboden (11,11') vorgesehenen Heizunterlage (2) aus einem gut wärmeleitenden Metall, die von einem in dieser Heizunterlage (2) zwischen einem Korpus (20,20') und dem Gefäßboden (11,11') integrierten elektrischen Heizkörper (3) beheizbar ist, wobei die Heizunterlage (2) stoffschlüssig mit dem Kochgefäß (1) verbunden ist, wobei der Korpus (20,20') flach und scheiben- oder ringförmig ausgebildet ist,
dadurch gekennzeichnet, daß
(a) die Heizunterlage (2) einen an dem Korpus (20,20') einstückig ausgebildeten, umlaufend berandenden Kragenrand (21) aufweist, der aus der Ebene der Heizunterlage (2) in Richtung auf das Kochgefäß (1) abgewinkelt ist, wobei
(b) der Heizkörper (3) an seiner radial nach außen weisenden Kontur (31) von dem Kragenrand (21) berandend eingefaßt ist und daß
(c) der Kragenrand (21) von der Außenkontur (12a) der Gefäßwandung (12) so beabstandet ist, daß eine den Kragenrand (21) überdeckende Verkleidung (4) der Heizunterlage (2) mit dieser Außenkontur (12a) etwa bündig ausführbar ist.

2. Kochgeschirr nach Anspruch 1, dadurch gekennzeichnet, daß der Heizkörper (3) mit der Heizunterlage (2) und/oder dem Kochgefäß (1) stoffschlüssig verbunden ist.

3. Kochgeschirr nach Anspruch 1 oder 2, dadurch gekennzeichnet, daß die Heizunterlage (2) und/oder der Heizkörper (3) mit dem Kochgefäß (1) durch Lötung (L) verbunden sind.

4. Kochgeschirr nach Anspruch 1 bis 3, dadurch gekennzeichnet, daß der Korpus (20,20') der Heizunterlage (2) mit dem Kochgefäß (1) durch Reibschweißung oder Lötung verbunden ist.

5. Kochgeschirr nach einem der Ansprüche 1 bis 4, dadurch gekennzeichnet, daß der Kragenrand (21) an dem Korpus (20,20') um einen Winkel (w) von etwa 90° gegenüber der Ebene des Korpus (20,20') abgewinkelt angeordnet ist.

6. Kochgeschirr nach Anspruch 5, dadurch gekennzeichnet, daß der Kragenrand (21) um einen Winkel (w) von über 90° abgewinkelt angeordnet ist.

7. Kochgeschirr nach einem der Ansprüche 1 bis 6, dadurch gekennzeichnet, daß der Heizkörper (3) ringförmig, vorzugsweise kreisringförmig, ausgebildet ist.

8. Kochgeschirr nach Anspruch 7, dadurch gekennzeichnet, daß der Heizkörper (3) an seiner radial nach innen weisenden Kontur (32) von einer Ringwand (21b) der Heizunterlage (2) berandend eingefaßt ist.

9. Kochgeschirr nach Anspruch 8, dadurch gekennzeichnet, daß die Ringwand (21b) von einer flachen scheibenförmigen Einziehung (21c) der Heizunterlage (2) ausgebildet wird.

10. Kochgeschirr nach Anspruch 8 oder 9, dadurch gekennzeichnet, daß der Gefäßboden (11') eben ausgebildet ist.

11. Kochgeschirr nach Anspruch 7, dadurch gekennzeichnet, daß der Heizkörper (3) mit seiner radial nach innen weisenden Kontur (32) an dem Kragen (11c) einer rondenförmigen, flachen Ausstülpung (11a) in dem Gefäßboden (11) anliegt.

12. Kochgeschirr nach einem der Ansprüche 1 bis 11, dadurch gekennzeichnet, daß der Kragenrand (21) Ausnehmungen aufweist, die von Zuführungen für den Heizkörper (3) durchsetzbar sind.

13. Verfahren zur Herstellung eines Kochgeschirrs nach einem der Ansprüche 1 bis 12, dadurch gekennzeichnet, daß
(a) das Kochgefäß (1), gegebenenfalls mit einer flachen Ausstülpung (11a) des Gefäßbodens (11), hergestellt wird, beispielsweise durch Tiefziehen,
(b) die Heizunterlage (2) mit dem abgewinkelten Kragenrand (21) und gegebenenfalls unter Ausbildung der Einziehung (21c) oder der Ringwand (21b) hergestellt wird, beispielsweise stufenweise aus einer Ronde oder komplett durch Gießpressen,
(c) der Heizkörper (3) in die Heizunterlage (2), an dem Kragenrand (21) anliegend, eingelegt oder eingepreßt wird und
(d) die Heizunterlage (2), mit dem Korpus (20,20') den Gefäßboden (11,11') kontaktierend, an ihrem Kragenrand (21) und gegebenenfalls der Heizkörper (3), einzeln oder gemeinsam, mit dem Gefäßboden (11,11') des Kochgefäßes (1) stoffschlüssig, vorzugsweise durch Löten, verbunden werden.

14. Verfahren nach Anspruch 13, dadurch gekennzeichnet, daß der Korpus (20,20') der Heizunterlage (2) durch Reibschweißen oder Lötung flächig mit dem Gefäßboden (11,11') verbunden wird.

## Claims

1. An electrically heated cooking appliance comprising a cooking vessel (1) of stainless steel which is provided integrally with a base (11, 11') and a wall (12), and a heating underlay (2) of a good conductive metal which is provided below the vessel base (11, 11') and which can be heated by an electrical heating member (3) integrated in the said heating underlay (2) between a member (20, 20') and the vessel base (11, 11'), wherein the heating underlay (2) is joined integrally to the cooking vessel (1) and wherein the member (20, 20') is made flat and disc-shaped or annular,
**characterized in that**
(a) the heating underlay (2) has a flanged rim (21) which is formed integrally with the member (20, 20') and forms a continuous boundary and which is angled out of the plane of the heating underlay (2) in the direction towards the cooking vessel (1), wherein
(b) the heating member (3) is bordered by the flanged rim (21) on its contour (31) facing radially outwards, and
(c) the flanged rim (21) is spaced at such a distance from the external contour (12a) of the vessel wall (12) that a casing (4) of the heating underlay (2) covering the flanged rim (21) can be made approximately flush with the said external contour (12a).

2. A cooking appliance according to Claim 1, **characterized in that** the heating member (3) is integrally joined to the heating underlay (2) and/or the cooking vessel (1).

3. A cooking appliance according to Claim 1 or 2, **characterized in that** the heating underlay (2) and/or the heating member (3) is or are joined to the cooking vessel (1) by soldering (**L**).

4. A cooking appliance according to Claims 1 to 3, **characterized in that** the member (20, 20') of the heating underlay (2) is joined to the cooking vessel (1) by friction welding or soldering.

5. A cooking appliance according to one of Claims 1 to 4, **characterized in that** the flanged rim (21) is arranged on the member (20, 20') in an angled manner at an angle (**w**) of approximately 90° with respect to the plane of the member (20, 20').

6. A cooking appliance according to Claim 5, **characterized in that** the flanged rim (21) is arranged in an angled manner at an angle (**w**) of over 90°.

7. A cooking appliance according to one of Claims 1 to 6, **characterized in that** the heating member (3) is made in the shape of a ring, preferably in the shape of a circular ring.

8. A cooking appliance according to Claim 7, **characterized in that** the heating member (3) is bordered by an annular wall (21b) of the heating underlay (2) on its contour (32) facing radially inwards.

9. A cooking appliance according to Claim 8, **characterized in that** the annular wall (21b) is formed by a flat disc-shaped indentation (21c) of the heating underlay (2).

10. A cooking appliance according to Claim 8 or 9, **characterized in that** the vessel bottom (11') is made flat.

11. A cooking appliance according to Claim 7, **characterized in that** the heating member (3) rests with its contour (32) facing radially inwards against the collar (11c) of a flat, circle-shaped protuberance (11a) in the vessel base (11).

12. A cooking appliance according to one of Claims 1 to 11, **characterized in that** the flanged rim (21) has recesses which can be traversed by leads for the heating member (3).

13. A method of producing a cooking appliance according to one of Claims 1 to 12, **characterized in that**
(a) the cooking vessel (1) is produced optionally with a flat protuberance (11a) in the vessel base (11), for example by deep drawing,
(b) the heating underlay (2) is produced with the angled flanged rim (21) and optionally forming the indentation (21c) or the annular wall (21b), for example in steps from a disc or in a complete manner by the autoforging process,
(c) the heating body (3), resting against the flanged rim (21), is inserted or pressed into the heating underlay (2), and
(d) the heating underlay (2), with the member (20, 20') touching the vessel base (11, 11'), at its flanged rim (21) and optionally the heating body (3) are joined individually or jointly to the base (11, 11') of the cooking vessel (1) in an integral manner, preferably by welding.

14. A method according to Claim 13, **characterized in that** the member (20, 20') of the heating underlay (2) is joined in a planar manner to the vessel base (11, 11') by friction welding or soldering.

## Revendications

1. Ustensile de cuisson chauffé électriquement, constitué d'un récipient de cuisson (1) en acier inoxydable, qui présente, en formant une seule pièce, un fond de récipient (11, 11') et une paroi de récipient (12), et d'un soubassement de chauffe (2) en métal bon conducteur de la chaleur, qui est prévu sous le fond de récipient (11, 11') et qui peut être chauffé par un corps de chauffe électrique (3), intégré dans ce soubassement de chauffe (2) entre un corps (20, 20') et le fond de récipient (11, 11'), le soubassement de chauffe (2) étant raccordé, avec continuité de la matière, au récipient de cuisson, le corps (20, 20') étant réalisé plat, en forme de disque ou d'anneau,
caractérisé
a) en ce que le soubassement de chauffe (2) présente une bordure formant collerette (21), réalisée en une seule pièce sur le corps (20, 20') et constituant le contour périphérique, qui est replié à partir du plan du soubassement de chauffe (2) vers le récipient de cuisson (1),
b) en ce que le corps de chauffe (3), sur son contour (31) tourné radialement vers l'extérieur, est enfermé, sur son bord, par la bordure formant collerette (21),
c) et en ce que la bordure formant collerette (21) est située, par rapport au contour extérieur (12a) de la paroi de récipient (12), à une distance telle qu'un habillage (4) du soubassement de chauffe (2), recouvrant la bordure formant collerette (21), peut être exécuté sensiblement dans l'affleurement du contour extérieur (12a).

2. Ustensile de cuisson suivant la revendication 1, caractérisé en ce que le corps de chauffe (3) est raccordé au soubassement de chauffe (2) et/ou au récipient de cuisson (1), avec continuité de la matière.

3. Ustensile de cuisson suivant la revendication 1 ou la revendication 2, caractérisé en ce que le soubassement de chauffe (2) et/ou le corps de chauffe (3) sont raccordés au récipient de cuisson (1) par brasage (L).

4. Ustensile de cuisson suivant l'une des revendication 1 à 3, caractérisé en ce que le corps (20, 20') du soubassement de chauffe (2) est raccordé au récipient de cuisson (1) par soudure par friction ou par brasage.

5. Ustensile de cuisson suivant l'une des revendication 1 à 4, caractérisé en ce que la bordure formant collerette (21) sur le corps (20 20') est disposée repliée d'un angle (w) d'environ 90° par rapport au plan du corps (20, 20').

6. Ustensile de cuisson suivant la revendication 5, caractérisé en ce que la bordure formant collerette (21) est repliée d'un angle (w) supérieur à 90°.

7. Ustensile de cuisson suivant l'une des revendication 1 à 6, caractérisé en ce que le corps de chauffe (3) est réalisé avec une forme d'anneau, de préférence une forme d'anneau circulaire.

8. Ustensile de cuisson suivant la revendication 7, caractérisé en ce que le corps de chauffe (3), sur son contour (32) tourné radialement vers l'intérieur, est enchâssé et entouré par une paroi annulaire (21b) du soubassement de chauffe (2).

9. Ustensile de cuisson suivant la revendication 8, caractérisé en ce que la paroi annulaire (21b) est réalisée par une zone en retrait (21c) plate, en forme de disque, du soubassement de chauffe (2).

10. Ustensile de cuisson suivant la revendication 8 ou la revendication 9, caractérisé en ce que le fond de récipient (11') est réalisé plan.

11. Ustensile de cuisson suivant la revendication 7, caractérisé en ce que le corps de chauffe (3) repose, avec son contour (32) tourné radialeent vers l'intérieur, contre la collerette (11c) d'une zone plane rabattue (11a), de forme ronde, dans le fond (11) du récipient.

12. Ustensile de cuisson suivant l'une des revendication 1 à 11, caractérisé en ce que la bordure formant collerette (21) présente des évidements que peuvent traverser des conducteurs d'alimentation pour le corps de chauffe (3).

13. Procédé de fabrication d'un ustensile de cuisson suivant les revendication 1 à 12, caractérisé en ce que
a) le récipient de cuisson (1) est réalisé éventuellement avec une zone plane rabattue (11a) du fond (11) du récipient, par exemple par emboutissage profond,
b) en ce que le soubassement de chauffe (2) est réalisé avec la bordure repliée en collerette (21) et, le cas échéant, en réalisant la zone en retrait (21c) ou la paroi annulaire (21b), par exemple par étapes à partir d'un flan circulaire, ou en un seul bloc, par moulage sous pression,
c) en ce que le corps de chauffe (3) est placé dans le soubassement de chauffe (2), au contact de la bordure formant collerette (21), ou y est enfoncé sous pression, et
d) en ce que le soubassement de chauffe (2), en étant au contact du fond de récipient (11) avec le corps (20, 20'), est, sur la bordure formant collerette (21) du soubassement de chauffe (2) et éventuellement sur le corps de chauffe (3), séparément ou ensemble, raccordé, avec continuité de matière, au fond (11, 11') du récipient de cuisson (1), de préférence par brasage.

14. Procédé de fabrication d'un ustensile de cuisson suivant la revendication 13, caractérisé en ce que le corps (20, 20') du soubassement de chauffe (2) est raccordé à plat au fond de récipient (11, 11'), par soudure par friction ou par brasage.
